# EUROPÄISCHE PATENTSCHRIFT

(11) **EP 3 114 978 B1**
(45) Veröffentlichungstag und Bekanntmachung des Hinweises auf die Patenterteilung: **14.03.2018**
(21) Anmeldenummer: 16174114.5
(22) Anmeldetag: 13.06.2016
(51) Int. Cl.: A47L 15/42

(54) **GESCHIRRSPÜLMASCHINE, INSBESONDERE HAUSHALTSGESCHIRRSPÜLMASCHINE**
DISHWASHER, IN PARTICULAR HOUSEHOLD DISHWASHER
LAVE-VAISSELLE, NOTAMMENT LAVE-VAISSELLE MÉNAGER

(30) Priorität: 15.06.2015 DE 102015109509
(43) Veröffentlichungstag der Anmeldung: 11.01.2017
(73) Patentinhaber: Miele & Cie. KG, 33332 Gütersloh (DE)
(72) Erfinder: Bertram, Andre, 33739 Bielefeld (DE); Dahms, Tobias, 30519 Hannover (DE); Marks, Volker, 33611 Bielefeld (DE); Aßmann, Walter, 33739 Bielefeld (DE)

(56) Entgegenhaltungen:
- EP-A1- 2 682 040
- FR-A1- 2 071 952
- FR-A3- 2 523 431

## Beschreibung

Die Erfindung betrifft eine Geschirrspülmaschine, insbesondere Haushaltsgeschirrspülmaschine, mit einem einen Spülraum bereitstellenden Spülbehälter, der der Aufnahme von zu reinigendem Spülgut dient, eine innerhalb des Spülbehälters angeordneten Sprüheinrichtung zur Beaufschlagung von zu reinigendem Spülgut mit Spülflotte, und mit einer der Umwälzung der Spülflotte dienenden Umwälzpumpe, wobei die Sprüheinrichtung zur Versorgung mit Spülflotte mittels einer Spülflottenleitung an die Umwälzpumpe angeschlossen ist.

Geschirrspülmaschinen als solche sind aus dem Stand der Technik an sich gut bekannt, auch in der besonderen Ausführungsform als programmgesteuerte Haushaltsgeschirrspülmaschine, so z.B. aus der EP 2 540 208 A1.

Geschirrspülmaschinen der gattungsgemäßen Art verfügen über einen einen Spülraum bereitstellenden Spülbehälter. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dgl. handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die von der Sprüheinrichtung abgegebene Spülflotte sammelt sich in einem Sammeltopf an, in den der Spülbehälter einmündet. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt.

Dabei ist die Sprüheinrichtung zur Versorgung mit Spülflotte mittels einer Spülflottenleitung an die Umwälzpumpe angeschlossen.

Geschirrspülmaschinen der eingangs genannten Art können zudem mit einer Wärmepumpe ausgestattet sein, um den Energieverbrauch insbesondere während einer Heizphase der Spülflotte zu reduzieren, da der Heizvorgang den größten Teil am Energieverbrauch einer Geschirrspülmaschine verursacht.

Während einer bestimmungsgemäßen Verwendung der Geschirrspülmaschine dient die Wärmepumpe dazu, der Umgebungsatmosphäre, d.h. der die Geschirrspülmaschine umgebenden Luft Wärmeenergie zu entziehen, um diese auf die im Inneren der Geschirrspülmaschine umgewälzte Spülflotte zu übertragen. Eine typische Wärmepumpe verfügt in aller Regel über einen Verdampfer, einen Verdichter, einen Verflüssiger sowie über einen diese Komponenten miteinander strömungstechnisch verbindenden Strömungskreislauf. Dabei dient der Verflüssiger als Wärmetauscher.

Aus der DE 10 2011 000 042 A1 ist ein Verfahren zum Aufheizen von Spülflotte einer Geschirrspülmaschine mittels einer Luft-Wasser-Wärmepumpe bekannt. Demgemäß wird während einer Aufheizphase der Spülflotte über entsprechende Ventilatoren Raumluft angesaugt und über den Verdampfer der Wärmepumpe geleitet. Dies führt zu einer Abkühlung der zugeführten Raumluft, wobei die der Raumluft entzogene Wärmeenergie auf ein Arbeitsmedium, beispielsweise ein Kältemittel übertragen wird, was infolge dessen im Verdampfer verdampft. Das daraufhin in gasförmiger Form vorliegende Arbeitsmedium wird anschließend in einem Verdichter komprimiert und so auf ein höheres Temperaturniveau gebracht. Schließlich erfolgt eine Einleitung des gasförmigen Arbeitsmediums in den Verflüssiger, wo unter Energiefreigabe eine Verflüssigung des Arbeitsmediums stattfindet. Die dabei frei werdende Wärmeenergie dient der Spüflottenerwärmung.

Um die infolge der Kondensation des Arbeitsmediums frei werdende Wärmeenergie auf die Spülflotte zu übertragen, kommt als Verflüssiger ein Wärmetauscher zum Einsatz, der zwei koaxial zueinander angeordnete Rohre aufweist. Dabei dient das eine der Rohre als Kältemittelrohr, durch das hindurch das Arbeitsmedium geführt ist, und das andere als Spülflottenrohr, durch das hindurch die Spülflotte geführt ist. Bevorzugterweise ist das Spülflottenrohr innerhalb des Kältemittelrohrs angeordnet, so dass im bestimmungsgemäßen Verwendungsfall eine Wärmeübertragung von dem im Kältemittelrohr geführten Arbeitsmedium auf das im Kältemittelrohr angeordnete Spülflottenrohr und damit auch auf die durch das Spülflottenrohr hindurchgeführte Spülflotte stattfinden kann.

Die FR 2071952 A1 offenbart eine Geschirrspülmaschine mit einer Umwälzpumpe, an die eine erste Spülflottenleitung zur Versorgung mit Spülflotte angeschlossen ist, und an die eine zweite Spülflottenleitung zur Verbindung mit einem Fliehkraftabscheider angeschlossen ist.

Obgleich sich Geschirrspülmaschinen der vorbeschriebenen Art im alltäglichen Praxiseinsatz bewährt haben, besteht Verbesserungsbedarf. Es ist insbesondere angestrebt, den Energieverbrauch im bestimmungsgemäßen Verwendungsfall noch weiter zu reduzieren, auch hinsichtlich solcher Geschirrspülmaschinen, die über eine Wärmepumpe verfügen. Es ist deshalb die Aufgabe der Erfindung, eine Geschirrspülmaschine der eingangs genannten Art dahingehend weiterzuentwickeln, dass es konstruktionsbedingt gestattet ist, den Energieverbrauch im bestimmungsgemäßen Verwendungsfall zu senken.

Zur Lösung dieser Aufgabe wird mit der Erfindung eine Geschirrspülmaschine mit den Merkmalen von Anspruch 1 vorgeschlagen.

Erfindungsgemäß verfügt die Geschirrspülmaschine über zwei Spülflottenleitungen, die jeweils an die Umwälzpumpe angeschlossen sind. Dabei ist die erste Spülflottenleitung bevorzugterweise Teil eines ersten Strömungskreislaufes, wohingegen die zweite Spülflottenleitung Teil eines zweiten Strömungskreislaufes ist.

Zum Zwecke der strömungstechnischen Verbindung der Spülflottenleitungen mit der Umwälzpumpe verfügt die Umwälzpumpe über entsprechende Anschlüsse, wobei ein erster Anschluss für die erste Spülflottenleitung und ein zweiter Anschluss für die zweite Spülflottenleitung vorgesehen sind. Diese beiden Anschlüsse sind tangential und/oder radial zueinander versetzt angeordnet, infolge dessen sich konstruktionsbedingt im bestimmungsgemäßen Verwendungsfall eine Druckdifferenz in den beiden Spülflottenleitungen einstellt. Dabei sind die Anschlüsse erfindungsgemäß so gewählt, dass in der zweiten Spülflottenleitung ein gegenüber einem in der ersten Spülflottenleitung herrschender Druck verminderter Druck einstellt.

Die erste Spülflottenleitung dient in an sich bekannter Weise als Versorgungsleitung für die Sprüheinrichtung. Mittels der ersten Spülflottenleitung wird mithin im bestimmungsgemäßen Verwendungsfall Spülflotte von der Umwälzpumpe zu der Sprüheinrichtung der Geschirrspülmaschine gefördert, so dass in an sich bekannter Weise eine Beaufschlagung des von der Geschirrspülmaschine aufgenommenen Spülguts mit Spülflotte stattfinden kann.

Die zweite Spülflottenleitung dient indes nicht einer Versorgung der geschirrspülmaschinenseitigen Sprüheinrichtung mit Spülflotte. Die zweite Spülflottenleitung dient vielmehr dazu, Spülflotte in einen vom ersten Strömungskreislauf getrennten zweiten Strömungskreislauf abzuführen, wobei die erste Spülflottenleitung Bestandteil des ersten Strömungskreislaufes und die zweite Spülflottenleitung Bestandteil des zweiten Strömungskreislaufes ist. Die in den zweiten Strömungskreislauf abgeführte Spülflotte kann zu unterschiedlichen Zwecken genutzt und/oder behandelt und/oder aufbereitet werden. So lässt sich die Spülflotte beispielsweise einer Trübungssensierung, einer Aufbereitung und/oder einer Wärmepumpe zuführen. Unabhängig vom späteren Nutzen ist indes von erfindungswesentlicher Bedeutung, dass aufgrund der konstruktiven Ausgestaltung nach der Erfindung sichergestellt ist, dass der im Betriebsfall in der zweiten Spülflottenleitung anliegende Druck geringer als der in der ersten Spülflottenleitung ist, so dass die mit einer Beschickung der zweiten Spülflottenleitung einhergehende Verlustleistung minimiert und vernachlässigbar klein gehalten ist.

Die erfindungsgemäße Ausgestaltung findet insbesondere Verwendung in Kombination mit einer Wärmepumpe. Bevorzugterweise ist in diesem Fall die zweite Spülflottenleitung zumindest abschnittsweise als Teil eines von einer Wärmepumpe bereitgestellten Strömungskreislaufes ausgebildet. So kann die zweite Spülflottenleitung beispielsweise zumindest zum Teil als integraler Bestandteil eines Verflüssigers einer Wärmepumpe ausgebildet sein. So kann die Wärmepumpe beispielsweise über einen Verflüssiger verfügen, der zwei über koaxial zueinander angeordnete Leitungen verfügt, von denen die eine eine Kältemittelleitung und die andere zumindest abschnittsweise die zweite Spülflottenleitung ist. Gemäß einer solchen Konstruktion wird im bestimmungsgemäßen Anwendungsfall einem in einer Kältemittelleitung geführten Kältemittel Wärmeenergie entzogen und auf die in der zweiten Spülflottenleitung geführte Spülflotte übertragen.

Damit im Verflüssiger einer Wärmepumpe ein hinreichender Wärmeübertrag auf die aufzuheizende Spülflotte stattfinden kann, bedarf es einer hinreichend großen Tauscherfläche, weshalb aus dem Stand der Technik vorbekannte Spülflottenrohre bei einem Durchmesser von z.B. 3,5mm bis 9mm eine Länge von z.B. 1 m bis 2,7m aufweisen. Derart ausgebildete Rohre stellen aber nicht nur eine ausreichende Tauscherfläche zur Verfügung, sie stellen in nachteiliger Weise auch einen erheblichen Strömungswiderstand bereit.

Nach dem Stand der Technik standardmäßig eingesetzte Umwälzpumpen stellen üblicherweise einen Pumpendruck von über 200mbar, beispielsweise 220mbar bereit. Ein so hoher Pumpendruck wird für die Hindurchführung der Spülflotte durch das Spülflottenrohr des Verflüssigers aber nicht benötigt, weshalb zur Einstellung eines für die im Verflüssiger stattfindende Wärmeübertragung geeigneten Volumenstroms eingangsseitig des Spülflottenrohrs eine entsprechende Engstelle und/oder Drossel vorgesehen ist. Eine derartige Engstell- und/oder Drosselstelle ist in nachteilige Weise aber für Verschmutzung anfällig, was um so schwerer wiegt, als dass auch im bestimmungsgemäßen Verwendungsfall während eines Spülvorgangs unter Umständen abgelöste Speisereste und/oder dgl. Verschmutzungspartikel Bestandteil der umgewälzten Spülflotte sind.

In nachteiliger Weise kommt es bei der vorbekannten Konstruktion hinzu, dass der Druck direkt in die hydraulische Leistung eingeht, die sich als Produkt aus Druck und Volumenstrom darstellt. Wird z.B. zur Reduzierung der Verschmutzungsneigung der Durchmesser des Spülflottenrohrs mit 9mm gewählt, so ergibt sich durch einen Bypassvolumenstrom von 11 l/min bereits eine so hohe Verlustenergie, dass die Effizienz der gesamten Geschirrspülmaschine merklich reduziert ist. So ergeben 11l/min bei einem Arbeitsdruck der Umwälzpumpe von 220 mbar eine hydraulische Leistung von 4 W, so dass sich bei einem Gesamtwirkungsgrad der Umwälzpumpe von 20% ein Mehrbedarf an elektrischer Leistung von 20 W einstellt.

Um diesem Problem zu begegnen, ist es aus dem Stand der Technik bekannt, eine zur vorhandenen Umwälzpumpe zusätzliche Pumpe zur Förderung des Volumenstroms durch den Verflüssiger der Wärmepumpe einzusetzen. Eine solche zusätzliche Pumpe kann in vorteilhafter Weise auf die zu erfüllenden Anforderungen ausgelegt werden, was den Energieverlust reduziert. Von Nachteil einer solchen zusätzlichen Pumpe ist allerdings, dass sie als zusätzliches Bauteil höhere Kosten verursacht und auch zusätzlichen Bauraum innerhalb der Geschirrspülmaschine beansprucht.

Mit der Erfindung wird zur Überwindung der vorstehenden Nachteile ein anderer Lösungsweg beschritten. So ist vorgesehen, die zweite Spülflottenleitung zumindest abschnittsweise als Spülflottenrohr für den Verflüssiger einer Wärmepumpe zu nutzen, wobei die zweite Spülflottenleitung direkt an die Umwälzpumpe angeschlossen ist. Der Anschluss für die zweite Spülflottenleitung ist gegenüber dem Anschluss für die erste Spülflottenleitung versetzt ausgebildet, so dass sich in der zweiten Spülflottenleitung ein gegenüber dem in der ersten Spülflottenleitung herrschenden Druck verminderter Druck einstellt. Im Ergebnis kann so ohne eine zusätzliche Pumpe ein niedrigeres Druckniveau innerhalb der zweiten Spülflottenleitung erzeugt werden, womit eine der zweiten Spülflottenleitung vorgeschaltete Engstelle und/oder Drosselung überflüssig wird und sich zudem ein nur vernachlässigbarer hydraulischer Leistungsverlust einstellt.

Die zweite Spülflottenleitung führt nicht zur geschirrspülmaschinenseitigen Sprüheinrichtung. Es ist stattdessen ein separater Strömungskreislauf vorgesehen, der eingangsseitig und ausgangsseitig an die Umwälzpumpe angeschlossen ist. Zu diesem Zweck verfügt die Umwälzpumpe über im Unterschied zum Stand der Technik zwei zusätzliche Anschlüsse. Diese sind in ihrer relativen Ausrichtung zueinander derart angeordnet, dass sich zwischen den beiden zusätzlichen Anschlüssen eine vergleichsweise niedrige Druckdifferenz einstellt, die für eine bestimmungsgemäße Beschickung der Sprüheinrichtung nicht ausreichend ist, gleichwohl aber für eine Beaufschlagung des Verflüssigers der Wärmepumpe, und dies ohne Einsatz einer Engstelle und/oder Drossel.

Die erfindungsgemäße Ausgestaltung ermöglicht mithin ohne den Einsatz einer zusätzlichen Pumpe die Bereitstellung eines für den Betrieb des Verflüssigers der Wärmepumpe optimierten Drucks, womit der Energieverlust minimiert und ob der mangelnden Notwendigkeit, eine Engstelle und/oder eine Drossel vorzusehen, die Verschmutzungsneigung reduziert ist. Die vorgeschlagene Lösung ist damit kostengünstig, in der Herstellung einfach umsetzbar und benötigt keinen zusätzlichen Bauraum innerhalb der Geschirrspülmaschine.

Die mit der Erfindung vorgeschlagene Anschlussausgestaltung ist bevorzugterweise derart ausgelegt, dass der Druck in der zweiten Spülflottenleitung zwischen 5% und 25%, insbesondere zwischen 15% und 20%, des in der ersten Spülflottenleitung herrschenden Drucks beträgt. Dabei beträgt der Druck in der ersten Spülflottenleitung je nach eingesetzter Umwälzpumpe typischerweise zwischen 200mbar und 300mbar. Der in der zweiten Spülflottenleitung herrschende Druck ist damit gegenüber dem Umwälzpumpendruck deutlich reduziert, für eine bestimmungsgemäße Verwendung des Verflüssigers der Wärmepumpe aber hinreichend.

Gemäß einem weiteren Merkmal der Erfindung ist vorgesehen, dass die Umwälzpumpe eine einen zentralen Ansaugstutzen bereitstellende Radialpumpe ist, die für einen eingangs- und einen ausgangsseitigen Anschluss der zweiten Spülflottenleitung zwei radial zum Ansaugstutzen benachbarte Anschlüsse aufweist, die in radialer Richtung unterschiedlich weit beabstandet zum Ansaugstutzen angeordnet sind.

Die typischerweise als Radialpumpe vorliegende Umwälzpumpe verfügt über einen zentralen Ansaugstutzen. Dieser ist typischerweise strömungstechnisch an den Sammeltopf der Geschirrspülmaschine angeschlossen. Ausgangsseitig ist die Umwälzpumpe mit einem Anschluss für die als Versorgungsleitung für die Sprüheinrichtung dienende erste Spülflottenleitung ausgerüstet, so dass im bestimmungsgemäßen Verwendungsfall über den Ansaugstutzen geförderte Spülflotte zum Anschluss für die erste Spülflottenleitung gefördert wird, von wo aus dann die Spülflotte mittels der ersten Spülflottenleitung zur Sprüheinrichtung der Geschirrspülmaschine gelangt.

Zum Anschluss der zweiten Spülflottenleitung verfügt die Umwälzpumpe über einen eingangsseitigen Anschluss einerseits und einen ausgangsseitigen Anschluss andererseits. Der zwischen Eingang und Ausgang liegende Teil der zweiten Spülflottenleitung dient zumindest zum Teil als Spülflottenrohr, das Bestandteil des Verflüssigers der Wärmepumpe ist.

Gemäß einer ersten Ausführungsalternative sind der eingangsseitige Anschluss sowie der ausgangsseitige Anschluss der zweiten Spülflottenleitung als radial zum Ansaugstutzen der Umwälzpumpe benachbarte Anschlüsse ausgebildet. Dabei sind die beiden Anschlüsse in radialer Richtung unterschiedlich weit beabstandet zum Ansaugstutzen angeordnet, was zu der schon vorbeschriebenen Druckdifferenz innerhalb der Spülflottenleitung führt. Die geometrische Beabstandung der Anschlüsse zum Ansaugstutzen ist mithin ein Maß für die sich im bestimmungsgemäßen Verwendungsfall in der Spülflottenleitung einstellende Druckdifferenz. Die geometrische Beabstandung der beiden Anschlüsse zum Ansaugstutzen ist deshalb so gewählt, dass die im bestimmungsgemäßen Verwendungsfall auftretende Druckdifferenz in der zweiten Spülflottenleitung zur Minimierung von Energieverlusten optimiert ausgelegt ist.

Bevorzugterweise beträgt die durch die radial versetzte Anordnung der Anschlüsse bedingte Druckdifferenz zwischen 10mbar und 30mbar, vorzugsweise zwischen 15mbar und 25mbar, noch mehr bevorzugt 20mbar.

Gemäß einer alternativen Ausgestaltung der Erfindung ist vorgesehen, dass die Umwälzpumpe für einen eingangs- und einen ausgangsseitigen Anschluss der zweiten Spülflottenleitung zwei tangential zu einer von der Umwälzpumpe im Betriebsfall erzeugten Kreisströmung ausgebildete Anschlüsse aufweist. Im Unterschied zur vorstehenden ersten Alternative findet mithin keine Ausrichtung der Spülflotteleitungsanschlüsse in radialer Richtung zum Ansaugstutzen statt. Es sind vielmehr zwei tangential zum Ansaugstutzen ausgerichtete Anschlüsse vorgesehen. Dabei ist der eine Anschluss saugseitig und der andere Anschluss druckseitig zu einer durch die Umwälzpumpe erzeugten Kreisströmung ausgerichtet. Dabei beträgt die Druckdifferenz zwischen Saugseite und Druckseite bevorzugterweise zwischen 10mbar und 30mbar, noch mehr bevorzugt zwischen 15mbar und 25mbar und am meisten bevorzugt 20mbar.

Mit der Erfindung wird ferner vorgeschlagen eine Umwälzpumpe für eine Geschirrspülmaschine, insbesondere für eine Geschirrspülmaschine der vorbeschriebenen Art, mit einem eingangsseitigen und einem ausgangsseitigen Anschluss für eine erste Spülflottenleitung zur Versorgung einer Sprüheinrichtung mit Spülflotte sowie mit einem eingangsseitigen und einem ausgangsseitigen Anschluss für eine zweite Spülflottenleitung, wobei die Anschlüsse für die erste Spülflottenleitung und die Anschlüsse für die zweite Spülflottenleitung zur Ausbildung eines gegenüber einem in der ersten Spülflottenleitung herrschenden Drucks verminderten Drucks in der zweiten Spülflottenleitung getrennt voneinander ausgebildet sind.

Eine in vorbeschriebene Weise ausgebildete Umwälzpumpe gestattet es, strömungstechnisch voneinander getrennt sowohl eine Versorgungsleitung für eine Sprüheinrichtung an die Umwälzpumpe anzuschließen, als auch ein Spülflottenrohr, das als Teil eines Verflüssigers einer Wärmepumpe dient. Dabei ist die erfindungsgemäß vorgesehene Anschlusskonfiguration insofern von Vorteil, als dass sich in der als Versorgungsleitung dienenden ersten Spülflottenleitung einerseits und der das Spülflottenrohr bereitstellenden zweiten Spülflottenleitung andererseits unterschiedliche Druckverhältnisse einstellen. Der in der Versorgungsleitung im bestimmungsgemäßen Verwendungsfall herrschende Druck beträgt typischerweise zwischen 200mbar und 300mbar und ist dafür geeignet, Sprüharme einer Sprüheinrichtung in Drehbewegung versetzen zu können. Der im Spülflottenrohr herrschende Druck ist demgegenüber reduziert und beträgt beispielsweise nur 15% bis 25% des in der Versorgungsleitung herrschenden Drucks. Dieser Druck ist für einen bestimmungsgemäße Verwendung des Verflüssigers der Wärmepumpe ausreichend, so dass unnötige Energieverluste vermieden sind und auf den Einbau von eingangsseitig des Spülflottenrohrs vorzusehenden Engstellen und/oder Drosseln verzichtet werden kann. Darüber hinaus kann auf die Verwendung einer speziell auf die Verwendung des Verflüssigers ausgelegte Zusatzpumpe verzichtet werden.

Die Anschlüsse für die zweite Spülflottenleitung sind gemäß einem weiteren Merkmal der Erfindung derart versetzt zueinander ausgebildet, dass sich eine Druckdifferenz von zwischen 10mbar und 30mbar, vorzugsweise zwischen 15mbar und 25mbar, noch mehr bevorzugt 20mbar ausbildet.

Weitere Merkmale und Vorteile der Erfindung ergeben sich aus der nachfolgenden Beschreibung anhand der Figuren. Dabei zeigen
- Fig. 1a und 1b: in schematischer Darstellung eine erfindungsgemäße Geschirrspülmaschine;
- Fig. 2 und 3: in jeweils unterschiedlichen Ansichten schematisch eine Umwälzpumpe nach dem Stand der Technik;
- Fig.4 und 5: in jeweils unterschiedlichen Ansichten eine erfindungsgemäße Umwälzpumpe gemäß einer ersten Alternative und
- Fig. 6 und7: in jeweils unterschiedlichen Ansichten eine erfindungsgemäße Umwälzpumpe gemäß einer zweiten Alternative.

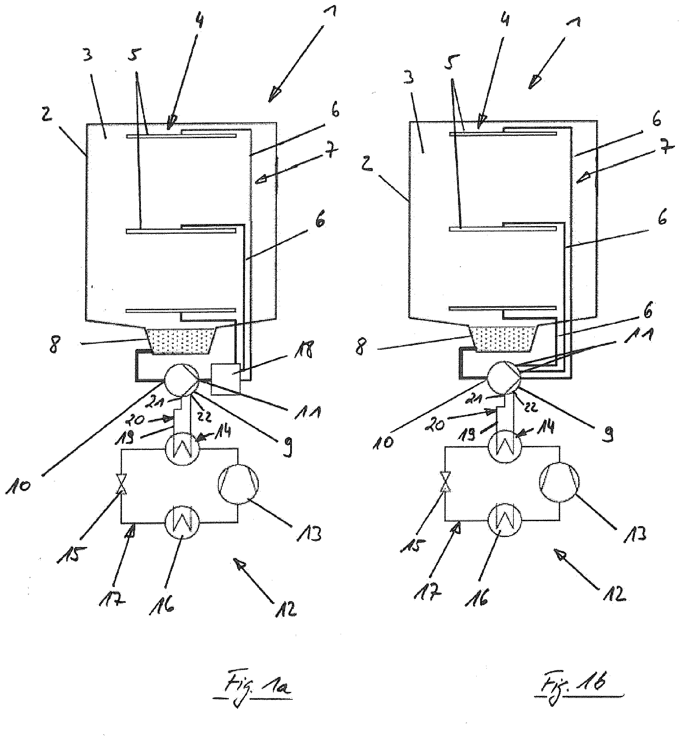

Die Figuren 1a und 1b lassen jeweils in lediglich schematischer Darstellung eine erfindungsgemäße Geschirrspülmaschine 1 erkennen, wobei der Unterschied eine gemäß der Ausführungsform nach Fig. 1a separat ausgebildete Wasserweiche 18 betrifft, die gemäß dem Ausführungsbeispiel nach Fig. 1b in die zugehörige Umwälzpumpe 9 integriert ist. Im Übrigen betreffen gleiche Bezugszeichen gleiche Baukomponenten.

Die Geschirrspülmaschine 1 verfügt über einen Spülbehälter 2. Dieser stellt einen Spülraum 3 bereit, der im bestimmungsgemäßen Verwendungsfall der Aufnahme von zu reinigendem Spülgut dient.

Zur Beschickung von zu reinigendem Spülgut mit Spülflotte dient eine Sprüheinrichtung 4, die innerhalb des Spülbehälters 2 angeordnet ist. Im gezeigten Ausführungsbeispiel verfügt die Sprüheinrichtung 4 über drei Sprüharme 5, die jeweils verdrehbar innerhalb des Spülbehälters 2 angeordnet sind.

Der Spülraum 3 mündet in einen im Detail nicht näher dargestellten Sammeltopf 8 ein, an den eine Umwälzpumpe 9 strömungstechnisch angeschlossen ist. Die Sprüheinrichtung 4 ist ihrerseits strömungstechnisch an die Umwälzpumpe 9 angeschlossen, so dass im bestimmungsgemäßen Verwendungsfall eine Beschickung der Sprüheinrichtung 4 mit Spülflotte mittels der Umwälzpumpe 9 stattfinden kann.

Für den strömungstechnischen Anschluss der Sprüharme 5 der Sprüheinrichtung 4 an die Umwälzpumpe 9 dient eine erste Spülflottenleitung 6, auch Versorgungsleitung genannt, die unter Zwischenschaltung der Umwälzpumpe 9 an einen Sammeltopf 8 angeschlossen ist. Für eine strömungstechnische Verbindung der Versorgungsleitung 6 mit der Umwälzpumpe 9 dient eingangsseitig der Anschluss 10 und ausgangsseitig der Anschluss 11. Zusammen mit der Umwälzpumpe 9 und der Sprüheinrichtung 4 bildet die Versorgungsleitung 6 einen ersten Strömungskreislauf 7 aus.

Wie die Figuren 1a und 1b erkennen lassen, sind je Sprüharm 5 der Sprüheinrichtung 4 eine Versorgungsleitung 6 vorgesehen. Jeder der Sprüharme 5 kann durch eine eigene Versorgungsleitung 6 mit Spülflotte beaufschlagt werden. Dies gestattet es, wahlweise einen oder mehrere Sprüharme 5 mit Spülflotte programmabhängig zu versorgen. Für die wahlweise Beschickung eines Sprüharms 5 oder mehrerer Sprüharme 5 dient eine Wasserweiche 18. Diese kann gemäß Fig. 1a als separates Bauteil oder gemäß Fig. 1b als in die Umwälzpumpe 9 integriertes Bauteil ausgebildet sein.

Erfindungsgemäß ist ein zweiter Strömungskreislauf 20 vorgesehen. Dieser verfügt über eine Spülflottenleitung 19, die an die Umwälzpumpe 9 angeschlossen ist, zu welchem Zweck die Umwälzpumpe 9 eingangsseitig einen Anschluss 22 und ausgangsseitig den Anschluss 21 zur Verfügung stellt. Im bestimmungsgemäßen Verwendungsfall wird Spülflotte im Strömungskreislauf 20 geführt.

Die Geschirrspülmaschine 1 weist des Weiteren eine Wärmepumpe 12 auf. Diese verfügt über einen Verdichter 13, einen Verflüssiger 14, eine Drosselstelle 15, einen Verdampfer 16 sowie über einen diese Baukomponenten strömungstechnisch miteinander verbindenden Kältemittelkreislauf 17.

Die Funktionsweise der Wärmepumpe 12 ergibt sich wie folgt. Im bestimmungsgemäßen Verwendungsfall gibt die von einem in den Figuren nicht näher dargestellten Ventilator durch den Verdampfer 16 gesaugten Zuluft ihre Wärmeenergie an ein in den Strömungskreislauf 17 geführtes Kältemittel ab. Die entzogene Wärmeenergie aus der Zuluft wird im Verdampfer 16 auf das Kältemittel übertragen, wodurch dieses verdampft. Anschließend wir das Kältemittel mittels des Verdichters 13 komprimiert und so auf ein höheres Temperaturniveau angehoben. Schließlich kondensiert das heiße Kältemittel im Verflüssiger 14 aus und heizt so die Spülflotte auf, die innerhalb des Verflüssigers 14 an dem heißen Kältemittel vorbeigeführt wird. An den Verflüssiger 14 schließt sich dann in Strömungsrichtung des Kältemittels noch eine Drosselstelle 15 an.

Der Verflüssiger 14 verfügt zum Zwecke einer effizienten Energieübertragung vom Kältemittel auf die Spülflotte über zwei koaxial zueinander angeordnete Rohre, von denen das äußere als Kältemittelrohr das Kältemittel und das innere Rohr die Spülflotte führt. Dabei ist das die Spülflotte führende Spülflottenrohr innerhalb des Kältemittelrohrs angeordnet. Die erfindungsgemäße Ausgestaltung ermöglicht es, die zweite Spülflottenleitung 19 des zweiten Strömungskreislaufes 20 als Spülflottenrohr des Verflüssigers 14 der Wärmepumpe 12 zu nutzen. Der erste an die Umwälzpumpe 9 angeschlossene Strömungskreislauf 7 dient mithin der Spülflottenversorgung der Sprüheinrichtung 4, wohingegen der zweite an die Umwälzpumpe 9 angeschlossene Strömungskreislauf 20 mit einem Teilabschnitt der zweiten Spülflottenleitung 19 als Spülflottenrohr für den Verflüssiger 14 der Wärmepumpe 12 dient.

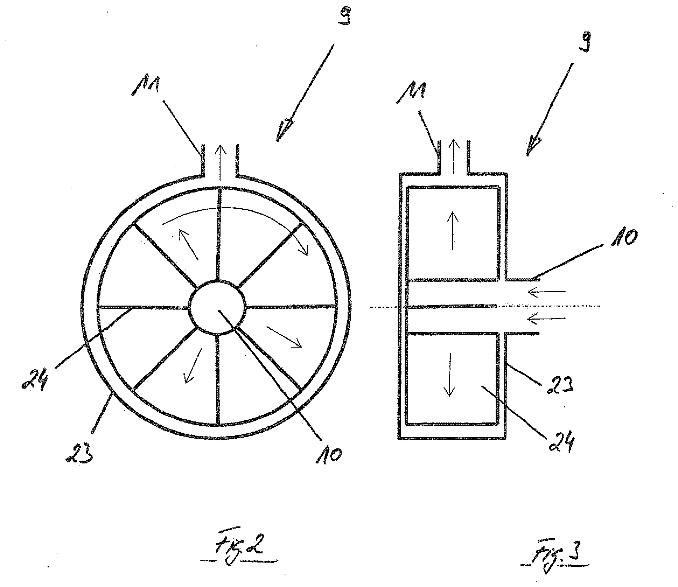

Von erfindungswesentlicher Bedeutung ist die Ausgestaltung der an der Umwälzpumpe 9 vorgesehenen Anschlüsse 10, 11 und 21, 22, insbesondere hinsichtlich ihrer relativen Lage zueinander, wie sich dies aus den weiteren Figuren 2 bis 7 ergibt.

Die Figuren 2 und 3 lassen in schematischer Draufsicht sowie in schematischer Seitenansicht eine aus dem Stand der Technik bekannte Umwälzpumpe 9 erkennen. Diese verfügt in an sich bekannter Weise über ein Gehäuse 23, in dem ein Laufrad 24 angeordnet ist. Es sind ferner eingangsseitig ein Ansaugstutzen 10 sowie ausgangsseitig ein Anschluss 11 vorgesehen. Im bestimmungsgemäßen Verwendungsfall wird Spülflotte über den Ansaugstutzen 10 angesaugt und durch das Laufrad 24 in eine schnelle Drehbewegung in Richtung des eingezeichneten Pfeils versetzt. Die daraus resultierenden Fliehkräfte drücken die Spülflüssigkeit nach außen, infolge dessen sich ein auch am Auslass 11 anstehender hoher Druck ausbildet. Der Auslass 11 ist über die vorbeschriebene Versorgungsleitung 6 an die Sprüheinrichtung 4 angeschlossen, wobei die Umwälzpumpe 9 am Auslass typischerweise einen Druck von ca. 200mbar bis 300mbar im Arbeitspunkt bereit stellt.

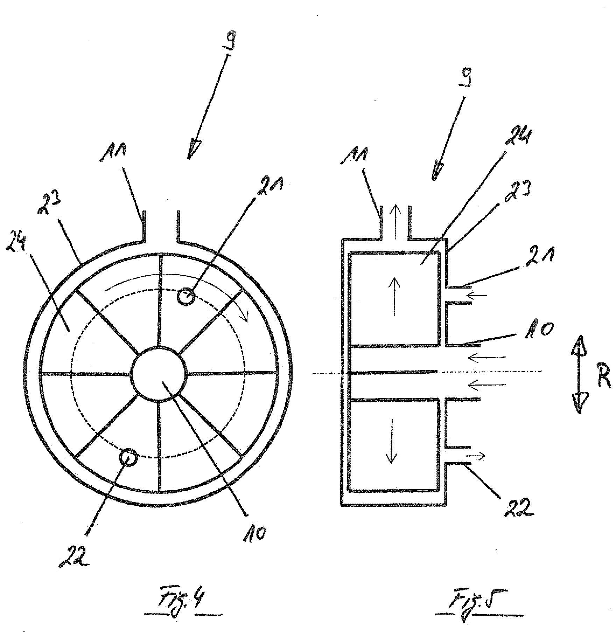

Die ebenfalls an die Umwälzpumpe 9 angeschlossene Spülflottenleitung 19 soll zur Vermeidung unnötiger Energieverluste mit einem wesentlich geringeren Druck als der typische Umwälzpumpendruck beaufschlagt werden, zu welchem Zweck erfindungsgemäß zwei alternative Ausführungsformen vorgesehen sind, wie sich diese aus den Figuren 4 und 5 sowie 6 und 7 ergeben.

Gemäß einer ersten alternativen Ausgestaltung der Erfindung, die in den Figuren 4 und 5 gezeigt ist, verfügt die Umwälzpumpe 9 über zwei zusätzliche Anschlüsse 21 und 22, die als Eingangsanschluss 21 sowie als Ausgangsanschluss 22 dienen. Diese Anschlüsse 21 und 22 sind radial zum Ansaugstutzen 10 benachbart ausgebildet, wobei sie in radialer Richtung R unterschiedlich weit beabstandet zum Anschlussstutzen 10 angeordnet sind. Dabei ist der Unterschied in der radialen Beabstandung zum Anschlussstutzen 10 derart bemessen, dass sich eine Druckdifferenz zwischen den beiden Anschlüssen 21 und 22 und damit auch in der Spülflottenleitung 19 von nur vorzugsweise 20mbar einstellt. Damit herrscht im bestimmungsgemäßen Verwendungsfall in der Versorgungsleitung 6 ein Druck von z.B. 200mbar, wohingegen der Druck in der gleichfalls an die Umwälzpumpe 9 angeschlossenen Spülflottenleitung 19 nur beispielsweise 20mbar beträgt.

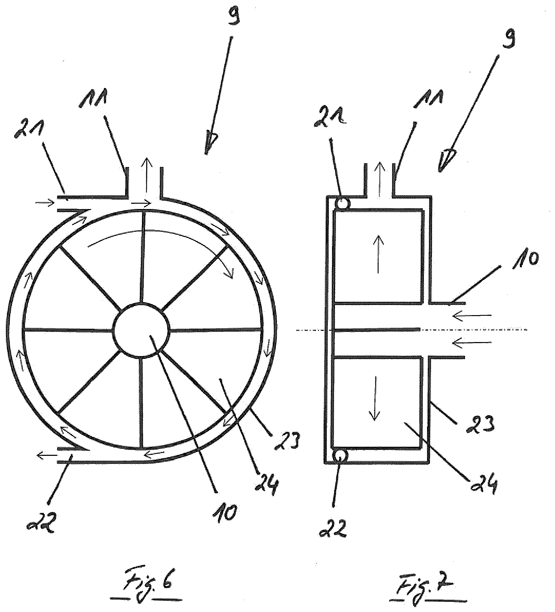

Eine alternative Anschlussausgestaltung ergibt sich aus dem Figuren 6 und 7. Die Umwälzpumpe 9 verfügt zum Anschluss der Spülflottenleitung 19 ebenfalls über zwei zusätzliche Anschlüsse 21 und 22. Diese sind aber im Unterschied zur vorstehenden Ausführungsform nach den Figuren 4 und 5 gleich beabstandet zum Ansaugstutzen 10 angeordnet. Allerdings sind die Anschlüsse tangential zu der vom Laufrad 24 erzeugten Kreisströmung und somit auch tangential zum Ansaugstutzen 10 ausgebildet, wobei der Anschluss 21 saugseitig und der Anschluss 22 druckseitig der Kreisströmung ausgebildet ist. Im bestimmungsgemäßen Verwendungsfall erzeugt die vom Laufrad 24 erzeugte Kreisströmung eine tangentiale Geschwindigkeitskomponente, die in den Anschluss 22 hineinweist und dort zu einem Staudruck führt. In dem in Bezug auf die Kreisströmung um 180° gedrehten Anschluss 21 verringert sich der Druck hingegen, womit sich die zur Förderung von Spülflotte durch die Spülflottenleitung 19 benötigte Druckdifferenz zwischen den Anschlüssen 21 und 22 ausbildet.

### Bezugszeichen

- 1: Geschirrspülmaschine
- 2: Spülbehälter
- 3: Spülraum
- 4: Sprüheinrichtung
- 5: Sprüharm
- 6: erste Spülflottenleitung (Versorgungsleitung)
- 7: erster Strömungskreislauf
- 8: Sammeltopf
- 9: Umwälzpumpe
- 10: erster Anschluss Versorgungsleitung (Ansaugstutzen)
- 11: zweiter Anschluss Versorgungsleitung
- 12: Wärmepumpe
- 13: Verdichter
- 14: Verflüssiger
- 15: Drosselstelle
- 16: Verdampfer
- 17: Kältemittelkreislauf
- 18: Wasserweiche
- 19: zweite Spülflottenleitung
- 20: zweiter Strömungskreislauf
- 21: erster Anschluss Spülflottenrohr
- 22: zweiter Anschluss Spülflottenrohr
- 23: Gehäuse
- 24: Laufrad

## Patentansprüche

1. Geschirrspülmaschine insbesondere Haushaltsgeschirrspülmaschine, mit einem einen Spülraum (3) bereitstellenden Spülbehälter (2), der der Aufnahme von zu reinigendem Spülgut dient, einer innerhalb des Spülbehälters (2) angeordneten Sprüheinrichtung (4) zur Beaufschlagung von zu reinigendem Spülgut mit Spülflotte, und mit einer der Umwälzung von Spülflotte dienenden Umwälzpumpe (9), wobei die Sprüheinrichtung (4) zur Versorgung mit Spülflotte mittels einer ersten Spülflottenleitung (6) an die Umwälzpumpe (9) angeschlossen ist, wobei eine zweite Spülflottenleitung (19) an die Umwälzpumpe (9) angeschlossen ist, und wobei die Umwälzpumpe (9) einen ersten Anschluss (11) für die erste Spülflottenleitung (6) und einen zweiten Anschluss (22) für die zweite Spülflottenleitung (19) aufweist, wobei die beiden Anschlüsse (11, 22) zur Ausbildung eines gegenüber einem in der ersten Spülflottenleitung (6) herrschenden Drucks verminderten Drucks in der zweiten Spülflottenleitung (19) versetzt zueinander angeordnet sind,
**dadurch gekennzeichnet,**
**dass** die Umwälzpumpe (9) eine einen zentralen Ansaugstutzen (10) bereitstellende Radialpumpe ist, die für einen eingangs- und einen ausgangsseitigen Anschluss der zweiten Spülflottenleitung (19) zwei radial zum Ansaugstutzen (10) benachbarte Anschlüsse (21, 22) aufweist, die in radialer Richtung unterschiedlich weit beabstandet zum Ansaugstutzen (10) angeordnet sind,
oder dass die Umwälzpumpe (9) für einen eingangs- und einen ausgangsseitigen Anschluss der zweiten Spülflottenleitung (19) zwei tangential zu einer von der Umwälzpumpe (9) im Betriebsfall erzeugten Kreisströmung ausgebildete Anschlüsse (21, 22) aufweist.

2. Geschirrspülmaschine nach Anspruch 1, **dadurch gekennzeichnet, dass** der Druck in der zweiten Spülflottenleitung (19) 5% bis 25%, vorzugsweise 15% bis 20%, des in der ersten Spülflottenleitung (6) herrschenden Drucks beträgt.

3. Geschirrspülmaschine nach einem der Ansprüche 1 oder 2,
**dadurch gekennzeichnet, dass**
die durch die radial versetzte Anordnung der Anschlüsse (21, 22) bedingte Druckdifferenz zwischen 10mbar und 30mbar, vorzugsweise zwischen 15mbar und 25mbar, noch mehr bevorzugt 20mbar beträgt.

4. Geschirrspülmaschine nach einem der Ansprüche 1 oder 2,
**dadurch gekennzeichnet, dass**
der eine Anschluss (21) saugseitig und der andere Anschluss (22) druckseitig zu einer von der Umwälzpumpe (9) im Betriebsfall erzeugten Kreisströmung angeordnet ist.

5. Geschirrspülmaschine nach einem der vorhergehenden Ansprüche,
**dadurch gekennzeichnet, dass**
die Druckdifferenz zwischen Saugseite und Druckseite 10mbar bis 30mbar, vorzugsweise zwischen 15mbar und 25mbar, noch mehr bevorzugt 20mbar beträgt.

6. Geschirrspülmaschine nach einem der vorhergehenden Ansprüche,
**dadurch gekennzeichnet, dass**
die zweite Spülflottenleitung (19) zumindest abschnittsweise als Teil eines von einer Wärmepumpe (12) bereitgestellten Strömungskreislaufs (20) ausgebildet ist.

7. Geschirrspülmaschine nach Anspruch 6,
**dadurch gekennzeichnet, dass**
die Wärmepumpe (12) einer Aufheizung von Spülflotte dient und einen Verflüssiger (14) aufweist, der über zwei koaxial zueinander angeordnete Leitungen vefügt, von denen die eine eine Kältemittelleitung und die andere die zweite Spülflottenleitung (19) ist.

## Claims

1. Dishwasher, in particular a household dishwasher, comprising a washing container (2) that provides a washing chamber (3) for receiving washware to be cleaned, a spray device (4) that is arranged on inside the washing container (2) for applying rinsing solution to washware to be cleaned, and a circulating pump (9) for circulating rinsing solution, the spray device (4) being connected to the circulating pump (9) by a first rinsing solution line (6) in order to supply rinsing solution, a second rinsing solution line (19) being connected to the circulating pump (9), and the circulating pump (9) having a first connection (11) for the first rinsing solution line (6) and a second connection (22) for the second rinsing solution line (19), the two connections (11, 22) being arranged offset relative to one another in order to form a pressure in the second rinsing solution line (19) which is reduced relative to a pressure prevailing in the first rinsing solution line (6),
**characterised in that**
the circulating pump (9) is a radial pump that provides a central suction branch (10) and has two connections (21, 22) for an input-side connection and an output-side connection of the second rinsing solution line (19), which connections are arranged so as to be radially adjacent to the suction branch (10) and spaced apart from the suction branch (10) at different distances in a radial direction,
or **in that** the circulating pump (9) has two connections (21, 22) for an input-side connection and an output-side connection of the second rinsing solution line (19), which connections are arranged tangentially to a cyclic flow generated by the circulating pump (9) during operation.

2. Dishwasher according to claim 1,
**characterised in that**
the pressure in the second rinsing solution line (19) is from 5% to 25%, preferably from 15% to 20%, of the pressure prevailing in the first rinsing solution line (6).

3. Dishwasher according to either claim 1 or claim 2,
**characterised in that**
the pressure difference caused by the radially offset arrangement of the connections (21, 22) is between 10 mbar and 30 mbar, preferably between 15 mbar and 25 mbar, more preferably 20 mbar.

4. Dishwasher according to either claim 1 or claim 2,
**characterised in that**
one connection (21) is arranged on the suction side and the other connection (22) is arranged on the pressure side of a cyclic flow generated by the circulating pump (9) during operation.

5. Dishwasher according to any of the preceding claims,
**characterised in that**
the pressure difference between the suction side and the pressure side is between 10 mbar and 30 mbar, preferably between 15 mbar and 25 mbar, more preferably 20 mbar.

6. Dishwasher according to any of the preceding claims,
**characterised in that**
the second rinsing solution line (19) is formed, at least in portions, as part of a flow circuit (20) provided by a heat pump (12).

7. Dishwasher according to claim 6,
**characterised in that**
the heat pump (12) heats the rinsing solution and has a condenser (14) having two lines that are arranged coaxially relative to each other, of which one is a refrigerant line and the other is the second rinsing solution line (19).

## Revendications

1. Lave-vaisselle, en particulier lave-vaisselle domestique, avec une cuve de lavage (2) qui fournit un espace de lavage (3) et qui sert à recevoir des objets à nettoyer, avec un équipement de pulvérisation (4) qui est disposé à l'intérieur de la cuve de lavage (2) et qui est destiné à exposer des objets à nettoyer au bain de lavage, et avec une pompe de circulation (9) servant à faire circuler le bain de lavage, dans laquelle l'équipement de pulvérisation (4) est raccordé à la pompe de circulation (9) pour l'alimentation en bain de lavage au moyen d'une première conduite de bain de lavage (6), dans laquelle une deuxième conduite de bain de lavage (19) est raccordée à la pompe de circulation (9), et dans laquelle la pompe de circulation (9) présente un premier raccordement (11) pour la première conduite de bain de lavage (6) et un deuxième raccordement (22) pour la deuxième conduite de bain de lavage (19), dans laquelle les deux raccordements (11, 22) sont disposés de façon décalée l'un par rapport à l'autre pour la formation, dans la deuxième conduite de bain de lavage (19), d'une pression qui est diminuée par rapport à une pression régnant dans la première conduite de bain de lavage (6),
**caractérisé en ce que**
la pompe de circulation (9) est une pompe radiale qui fournit une tubulure d'aspiration (10) centrale et qui présente, pour un raccordement, côté entrée et côté sortie, de la deuxième conduite de bain de lavage (19), deux raccords (21, 22) radialement adjacents à la tubulure d'aspiration (10) qui sont disposés, dans la direction radiale, aux distances différentes de la tubulure d'aspiration (10),
ou **en ce que** la pompe de circulation (9) présente, pour un raccordement côté entrée et un raccordement côté sortie de la deuxième conduite de bain de lavage (19), deux raccordements (21, 22) constitués de façon tangentielle à un écoulement circulaire produit par la pompe de circulation (9) en fonctionnement.

2. Lave-vaisselle selon la revendication 1,
**caractérisé en ce que**
la pression dans la deuxième conduite de bain de lavage (19) représente 5 % à 25 %, de préférence 15 % à 20 %, de la pression régnant dans la première conduite de bain de lavage (6).

3. Lave-vaisselle selon l'une des revendications 1 ou 2,
**caractérisé en ce que**
la différence de pression provoquée par l'agencement radialement décalé des raccordements (21, 22) est comprise entre 10 mbar et 30 mbar, de préférence entre 15 mbar et 25 mbar, de façon encore plus préférée est égale à 20 mbar.

4. Lave-vaisselle selon l'une des revendications 1 ou 2,
**caractérisé en ce**
**que**, par rapport à un écoulement circulaire produit par la pompe de circulation (9) en fonctionnement, un raccordement (21) est disposé côté aspiration et l'autre raccordement (22) est disposé côté refoulement.

5. Lave-vaisselle selon l'une des revendications précédentes,
**caractérisé en ce que**
la différence de pression entre le côté aspiration et le côté refoulement est comprise entre 10 mbar et 30 mbar, de préférence entre 15 mbar et 25 mbar, de façon encore plus préférée est égale à 20 mbar.

6. Lave-vaisselle selon l'une des revendications précédentes,
**caractérisé en ce que**
la deuxième conduite de bain de lavage (19) est constituée au moins par tronçons en tant que partie d'un circuit d'écoulement (20) fourni par une pompe à chaleur (12).

7. Lave-vaisselle selon la revendication 6,
**caractérisé en ce que**
la pompe à chaleur (12) sert à chauffer le bain de lavage et présente un condenseur (14) qui dispose de deux conduites disposées de façon coaxiale entre elles, dont l'une est une conduite de réfrigérant et l'autre la deuxième conduite de bain de lavage (19).
